# EUROPÄISCHE PATENTSCHRIFT

(11) **EP 1 228 830 B1**
(45) Veröffentlichungstag und Bekanntmachung des Hinweises auf die Patenterteilung: **10.11.2004**
(21) Anmeldenummer: 02001775.2
(22) Anmeldetag: 25.01.2002
(51) Int. Cl.: B23C 3/12, B29C 65/20, B65G 47/64

(54) **Maschine und Fertigungsstrasse für aus Kunststoffprofilen bestehende Rahmen**
Machine and processing line for a frame made of plastic profiles
Machine et ligne d'usinage pour un cadre constitué de profilés plastiques

(30) Priorität: 25.01.2001 DE 10103440
(43) Veröffentlichungstag der Anmeldung: 07.08.2002
(73) Patentinhaber: Urban GmbH & Co. Maschinenbau KG, D-87700 Memmingen (DE)
(72) Erfinder: Jägg, Josef, 88450 Berkheim (DE)
(74) Vertreter: Pfister, Stefan Helmut Ulrich

(56) Entgegenhaltungen:
- DE-A- 4 006 318
- DE-A- 4 138 352
- DE-A- 4 218 552
- DE-B- 1 296 093

## Beschreibung

Die Erfindung betrifft eine Maschine beziehungsweise eine Fertigungsstraße für die Herstellung und/oder Bearbeitung von aus Kunststoffprofilen bestehenden Tür- oder Fensterrahmen. Des weiteren betrifft die Erfindung auch ein Verfahren zum Bearbeiten von aus mehreren Kunststoffprofilen bestehenden Fensteroder Türrahmen.

Aus der DE 40 06 318 A1 ist eine Schweißraupenputzvorrichtung bekannt, bei der die geschweißten Rahmen beziehungsweise Rahmenteile mit ihrer zu der Fräsvorrichtung weisenden Kante in der Maschine positioniert werden. Die Positionierung erfolgt dabei in der Regel von Hand oder mittels Schlitten, wobei die Schlitten nach dem Bearbeitungsvorgang dann wieder zurückgeführt werden müssen und danach die Drehung per Hand erfolgt. Jeder der Profilfräser ist auf einem getrennten, in Richtung auf die jeweilige Ecke des Rahmens verschiebbaren Schlitten gelagert. Dadurch ist es möglich, die Profilfräser mittels des Schlittens geführt zu verfahren und in die Fräsposition zu bringen.

Aus der europäischen Patentschrift 320 624 der Anmelderin geht insbesondere eine Maschine zum Verputzen von Schweißraupen hervor. Bei der Herstellung der aus Kunststoffprofilen bestehenden Fensterrahmen ist es in der Regel unvermeidlich, daß an den Gehrungsflächen Schweißraupen entstehen, die abzuarbeiten sind. Dieser Vorgang wird Verputzen genannt. Für das Verputzen sind Bearbeitungsmaschinen bekannt, die einen, zwei oder vier Bearbeitungsköpfe aufweisen. In der Regel sind die Bearbeitungsköpfe im Eckbereich des Fensterrahmens angeordnet.

Für eine Steigerung der Bearbeitungsgeschwindigkeit, wie es bei einer Massenproduktion von vorgenannten Kunststoffrahmen wünschenswert ist, wird regelmäßig eine Maschine mit vier Bearbeitungsköpfen eingesetzt. Dabei ist allerdings zu beachten, daß Fensterrahmen auch bei einer Serienproduktion unterschiedliche Maße aufweisen können und das neue Positionieren entsprechend zeitaufwendig ist.

Es ist daher auch ein Prinzip bekannt, bei welchem zweimal zwei Bearbeitungsköpfe angeordnet werden, wobei ein erstes Kopfpaar die in Förderrichtung hinten liegenden Ecken bearbeitet und ein zweites Kopfpaar die in Förderrichtung vorne liegenden Ecken bearbeitet. In der Regel ragen dann die jeweiligen, nicht bearbeiteten Rahmenteile an den jeweiligen Seiten der Maschine hervor. Hierdurch gelingt es, bei entsprechendem Aufwand, eine für die Massenproduktion leistungsfähige Maschine zur Verfügung zu stellen.

Da aber bei dieser Anordnung insgesamt vier Bearbeitungsköpfe zur Verfügung gestellt werden, sind solche Maschinen entsprechend aufwendig und nur bei entsprechenden Produktionszahlen wirtschaftlich einsetzbar.

Die Erfindung hat es sich daher zur Aufgabe gemacht, die Herstellung beziehungsweise Bearbeitung von Tür- beziehungsweise Fensterrahmen oder Teilrahmen noch effizienter, das heißt schneller und auch kostengünstiger zu gestalten.

Zur Lösung dieser Aufgabe schlägt die Erfindung vor, daß an der Maschine ein Drehtisch für den Rahmen beziehungsweise den Teilrahmen vorgesehen ist und den Rahmen beziehungsweise Teilrahmen zwischen zwei Bearbeitungs- beziehungsweise Herstellschritten dreht.

Die Erfindung ist nicht beschränkt auf den Einsatz bei einer Verputzmaschine, sondern kann bei jeder Herstellungs- und Bearbeitungsmaschine für aus Kunststoffprofilen bestehende Türoder Fensterrahmen eingesetzt werden. Hierzu zählen neben der Verputzmaschine insbesondere auch die Schweißmaschinen, die aus den abgelängten, auf Gehrung geschnittenen Kunststoffprofilen die Rahmen oder Teilrahmen erstellen.

Neben den Schweißmaschinen sind aber auch die sonstigen Montagemaschinen, zum Beispiel für das Einbringen von Beschlägen und so weiter, zu nennen. Auch bei dieser Bearbeitung ist es von Vorteil, wenn zwischen zwei Bearbeitungsschritten eine Drehung des Rahmens beziehungsweise Teilrahmens erfolgt.

Gleichzeitig ist es auch möglich die erfindungsgemäßen Gedanken bei Maschinen einzusetzen, bei welchen nicht die kompletten geschlossenen Rahmen verarbeitet werden, sondern Teilrahmen bestehend aus zwei, drei und so weiter Profilstäben bearbeitet werden. Durch den erfindungsgemäßen Vorschlag wird erreicht, daß mit einer geringeren Anzahl von Bearbeitungsköpfen auch eine automatische, und somit auch kostengünstige Bearbeitung möglich ist. Natürlich ist durch die Anzahl der Bearbeitungsköpfe die Taktgeschwindigkeit beziehungsweise Bearbeitungsgeschwindigkeit pro Rahmen festgelegt, jedoch ist es durch die erfindungsgemäße Idee möglich auch bei nur sogenannten Zweikopfmaschinen eine hohe Effizienz und Rentabilität zur Verfügung zu stellen.

Die Aufgabe der Erfindung wird auch insbesondere durch ein Verfahren zum Bearbeiten, insbesondere für das Schweißen, Verputzen und/oder Montieren von aus mehreren Kunststoffprofilen bestehenden Fenster- und Türrahmen, beziehungsweise Teilrahmen, gelöst, wobei nach einem ersten Bearbeitungsschritt in einer ersten Bearbeitungsmaschine der Rahmen beziehungsweise Teilrahmen auf einem Drehtisch gedreht wird und dann einem zweiten Bearbeitungsschritt entweder in der ersten Bearbeitungsmaschine oder einer zweiten, anderen Bearbeitungsmaschine zugeführt und bearbeitet wird.

Der Rahmen oder Teilrahmen wird dabei zwischen zwei Bearbeitungsschritten auf einem erfindungsgemäßen Drehtisch derart gedreht, daß die nächste, noch nicht bearbeitete Rahmenecke dann unter dem Bearbeitungskopf angeordnet ist und bearbeitet werden kann. Der Drehtisch dreht dabei den Rahmen oder Teilrahmen um den Winkel, der notwendig ist, um die nächste, noch nicht bearbeitete Rahmenecke unter dem Bearbeitungskopf anzuordnen. Dadurch ist es möglich, auch Rahmen zu bearbeiten, die nicht die Form eines Viereckes, sondern die eines Vieleckes aufweisen. Dies sind beispielsweise fünf-, beziehungsweise sechseckige Rahmen oder Rahmen mit einer höheren Anzahl von Rahmenecken.

Das erfindungsgemäße Verfahren ist aber auf den Einsatz bei nur einer ersten Bearbeitungsmaschine nicht beschränkt. Oftmals ist es von Vorteil, daß der Rahmen/Teilrahmen zwischen einem ersten Bearbeitungsschritt auf einer ersten Bearbeitungsmaschine und einem zweiten Bearbeitungsschritt auf einer zweiten Bearbeitungsmaschine gedreht wird. Zum Beispiel wird der Teilrahmen zwischen der Verputzmaschine und der Montagemaschine (für die Beschläge) gedreht. Zum einen kann dadurch eine hohe Effizienz erreicht werden, da der Rahmen durch die Drehung optimal zu der jeweiligen Bearbeitungsmaschine positioniert wird.

Zum anderen bietet sich mit dieser erfindungsgemäßen Lösung auch an, den Drehtisch als Verteilstation oder Weiche zwischen zwei Bearbeitungsmaschinen einzusetzen. Hier resultiert eine große Vielfalt des Einsatzbereiches der Erfindung, da die Verwendung des Drehtisches den Herstellungsprozeß, insbesondere den automatisch gesteuerten Herstellungsprozeß von vorgenannten Fenster- oder Türrahmen, Flügel- oder Stockrahmen deutlich erleichtert und rationalisiert. Natürlich ist es möglich, daß der gleiche Drehtisch zunächst eine Umpositionierung des Rahmens in der ersten Bearbeitungsmaschine vornimmt (in diesem Fall wird der Rahmen mit dem gleichen Band wieder austransportiert, mit welchem es eintransportiert wurde), und im nächsten Bearbeitungsschritt erfolgt eine entsprechende Verteilung oder Zuordnung des Rahmens zu einer entsprchenden nachfolgenden Bearbeitung auf einer zweiten Bearbeitungsmaschine (zum Beispiel für die Montage der Beschläge).

Der Winkel, um den der Drehtisch den Rahmen jeweils dreht, ergibt sich aus der Anzahl der Ecken des zu bearbeitenden Vieleckes. Der Vorgang wird dabei so oft wiederholt, bis alle Ecken des geschweißten Rahmens verputzt, beziehungsweise bearbeitet sind. Ein derartiges Verfahren ist selbstverständlich auch beim Schweißen von vorgefertigten Rahmenteilen einsetzbar. Mit diesem Verfahren wird es möglich, Verputz- und Schweißarbeiten auch an Vielecken automatisch durchzuführen, bei denen die Rahmenteile nicht in einem Winkel von 90° zueinander angeordnet sind. Ansonsten wird der Rahmen/Teilrahmen zum Beispiel um einen Winkel von 90° oder ein Vielfaches hiervon gedreht.

Auch wenn in dieser Anmeldung oftmals von Verputzen als Bearbeitung gesprochen wird, so darf dies nicht beschränkend, sondern beispielhaft beschreibend ausgelegt werden. Neben dem Verputzen sind natürlich alle anderen Bearbeitungsschritte bei der Herstellung von Fenster oder Türen im Sinne der Erfindung einsetzbar.

Insbesondere wird der erfindungsgemäße Vorteil bei dem ebenfalls zur Erfindung gehörenden Verfahren zum Verputzen von aus mehreren Kunststoffprofilen bestehenden Tür- oder Fensterrahmen deutlich. Hierbei wird vorgeschlagen, daß zwei Bearbeitungsköpfe vorgesehen sind und diese zwei Ecken des Rahmens gleichzeitig bearbeiten. Hernach wird der Rahmen auf dem Drehtisch gedreht und hernach die zwei noch nicht bearbeiteten Rahmenecken bearbeitet.

Zum Stand der Technik war hierzu bekannt, daß bei Zweikopfmaschinen der Rahmen in der Bearbeitungsmaschine festgehalten wurde und die Bearbeitungswerkzeuge beziehungsweise Köpfe so geschwenkt wurden, daß diese nacheinander zwei Ecken bearbeiteten. Daraus resultierte ein entsprechend komplexer Aufbau der Lagerungen des Bearbeitungskopfes, da dieser entsprechend den unterschiedlichen Größen auch translatorisch zu bewegen ist, immer auf Gehrung zu positionieren ist und gleichzeitig in der Schwenkbewegung an die richtige Eckposition zu schwenken ist. Dabei ist zu beachten, daß diese Bearbeitungsköpfe mit den entsprechenden Lagerungen ein Gewicht von mehreren 100 kg aufweisen können, was zusätzlich die exakte Führung und Positionierung konstruktiv erschwert und auch kostenmäßig verteuert.

Hiergegen erlaubt der erfindungsgemäße Vorschlag, daß die Bearbeitungsköpfe zwar in der Rahmenebene beweglich bleiben, um den entsprechenden Bearbeitungsbereich zu erreichen. Auf den aufwendigen Verschwenkmechanismus, der für jeden Bearbeitungskopf doppelt auszuführen ist, kann aber verzichtet werden. Der hieraus resultierende konstruktive Vorteil geht einher mit gleich schnellen, wenn nicht sogar schnelleren Bearbeitungszeiten beziehungsweise Taktzyklen, da die Zeitdauer die benötigt wird um den Rahmen auf dem Drehtisch zu drehen nicht länger ist wie die Zeit die benötigt wird, um die Bearbeitungsköpfe zu verschwenken und neu zu positionieren. Die Erfindung erreicht daher bei den erfindungsgemäßen Maschinen einen konstruktiv einfachen Aufbau bei schnelleren Taktgeschwindigkeiten und günstigeren Herstellungskosten.

Die Erfindung erstreckt sich auch auf eine Fertigungsstraße für die Herstellung und Bearbeitung von aus Kunststoffprofilen bestehenden Tür- oder Fensterrahmen. Bei einer industrieellen Fertigung von den vorgenannten Rahmen sind verschiedene Maschinen, die entsprechend für die Herstellung oder für die Bearbeitung der Fensterrahmen optimiert sind, entlang eines Transportweges angeordnet. Dabei ist zu beachten, daß entsprechend der auf den verschiedenen Maschinen notwendigen Bearbeitungszeiten zum Beispiel drei Verschweißmaschinen einem Verputzapparat zugeordnet sind. Für einen automatischen Betrieb einer solchen Fertigungsstraße sind die drei Ausgänge der Schweißmaschine auf einen Eingang der Verputzmaschine zusammenzuführen.

Der Einsatz eines Drehtisches im Transportweg einer erfindungsgemäßen Fertigungsstraße erlaubt es, daß an diesem Drehtisch zum Beispiel eingangsseitig die drei Zuförderwege der Schweißmaschinen vorgesehen sind und ausgangsseitig die eingelieferten Rahmen an die Verputzmaschine übergeben werden. Gleichzeitig oder unabhängig davon ist es möglich, daß der Drehtisch auch die Umdrehfunktion des Rahmens in der Bearbeitungsmaschine, wie vorbeschrieben, erfüllt.

Die erfindungsgemäße Fertigungsstraße ist in einer Variante der Erfindung auch so ausgestaltet, daß der Drehtisch zwischen Verputzmaschine und den abschließend nachfolgenden Montagemaschinen (zum Beispiel für das Montieren der Beschläge oder sonstige Einbauten am Rahmen) vorgesehen ist. In diesem Einsatzbereich hat der Drehtisch unter andrem die Aufgabe, als "Weiche" zu wirken. Die Fertigungsstraße erkennt zum Beispiel durch entsprechende Codierung der Rahmen oder Bilderkennung die Art des Rahmens (zum Beispiel im Bauwerk befestigte Stockrahmen oder bewegliche Flügelrahmen). Je nachdem, welcher Rahmen gerade angefördert wird, entscheidet die Steuerung des Systemes, ob dieser Rahmen einer weiteren Bearbeitung zuzuführen ist. Zum Beispiel ist in dem Flügelrahmen der gesamte Beschlag einzubauen, was entsprechend automatisiert erfolgt. Beim Stockrahmen hingegen sind solche Einbauten nicht notwendig. Der Drehtisch fungiert daher auch als Verteilorgan innerhalb der Fertigungsstraße.

Besonders attraktiv ist die Erfindung auch deswegen, daß mit einem Drehtisch gemäß der Erfindung die verschiedensten Funktionen bei der Herstellung eines Fensterrahmens unterstützt werden kann. Er ist sowohl in einer Maschine, als auch in einer Fertigungsstraße einsetzbar, woraus sich verhältnismäßig große Stückzahlen und große Serien ergeben, die nur minimal auf den jeweiligen Einsatzbereich anzupassen sind, wodurch sich der Einsatz der Erfindung weiter verbilligt. Des weiteren erlaubt die Erfindung eine erhebliche Steigerung der Effektivität und auch der Komfortabilität der entsprechend ausgestatteten Anlagen.

Je nach Einsatzbereich ist auch vorgesehen, daß der Drehtisch entlang des ganzen Transportweges, zwischen zwei Maschinen der Fertigungsstraße oder vor der ersten oder hinter der letzten Maschine angeordnet ist.

Die Erfindung bezieht sich insbesondere auf die Verwendung des an sich bekannten Drehtisches bei der Herstellung von aus Kunststoffprofilen bestehenden Tür- oder Fensterrahmen in einer Fertigungsstraße oder in einer Maschine, um entsprechend den Anwendungsfällen den Rahmen zu drehen oder auszurichten.

Entsprechend einer Weiterbildung der Erfindung ist es vorgesehen, daß die Maschine zwei Bearbeitungsköpfe aufweist. Die Bearbeitungsköpfe sind dabei entsprechend einer Ausbildung in einem Winkel von 90° zueinander angeorndet. In einer weiteren Ausbildung der Erfindung sind die zwei Bearbeitungsköpfe in einem Winkel von 180° zueinander angeordnet.

Ein Aspekt der Erfindung ist dadurch gegeben, daß die Maschine vier Bearbeitungsköpfe aufweist. Dies ist insbesondere bei aus dem Stand der Technik bekannten "Zwei mal Zwei-Maschinen" bekannt, wo es erforderlich ist, den Rahmen zwischen zwei Bearbeitungsschritten jeweils zu drehen, da bei derartigen Maschinen immer gleichzeitig zwei Ecken von zwei Rahmen bearbeitet werden. Hierdurch wird eine weitere Erhöhung der Durchsatzleistung derartiger Maschinen erreicht.

Von besonderem Vorteil ist es, wenn der Drehtisch unter dem Bearbeitungskopf angeordnet ist. In diesem Fall ist vorgesehen, daß der Drehtisch auch gleichzeitig als Auflagefläche des Rahmens in der Bearbeitungsmaschine dienen kann.

Der Drehtisch ist in Förderrichtung der Rahmen vor oder hinter der Maschine anordenbar. Dies richtet sich nach den Förderströmen von Rahmen, beziehungsweise Rahmenteilen und/oder den Platzverhältnissen am Aufstellort der Maschine.

Es wurde weiter gefunden, daß es von Vorteil ist, wenn der Drehtisch eine Hub- und Absenkvorrichtung zum Heben, beziehungsweise Absenken des zu bearbeitenden Rahmens, beziehungsweise Rahmenteiles zwischen zwei Bearbeitungsschritten aufweist. Diese erfindungsgemäße Weiterentwicklung erlaubt es zum Beispiel, den Drehtisch aus dem Kollissionsbereich mit anderen Maschinenteile heraus zu bewegen. Der Drehtisch wird einfach angehoben und dann gedreht, wodurch Kollissionen mit anderen Maschinen- oder Anlagenteilen zuverlässig vermieden werden.

Die erfindungsgemäße Anordnung einer Hub- oder Absenkvorrichtung bietet aber auch den Vorteil, daß der Drehtisch die angeförderten Rahmen, beziehungsweise Teilrahmen auf einer ersten Ebene aufnimmt und die gedrehten Rahmen beziehungsweise Teilrahmen auf einer zweiten, von der ersten Ebene verschiedene Ebene wieder ausgibt. Dies kann zum Beispiel bei Bearbeitungsmaschinen, die eine Bearbeitung übereinander durchführen, von Vorteil sein. Es ist aber auch bei Fertigungsstraßen interessant, den Teilrahmen beziehungsweise Rahmen im Drehtisch auch in der Höhe zu verändern, da bei einer entsprechenden Weichenfunktion eine Vielzahl von Transportmitteln/Förderbändern an dem Drehtisch, gegebenenfalls in unterschiedlichen Ebenen übereinander anschließen können, die von dem Drehtisch entsprechend beschickt werden können. Es resultiert hieraus eine reichhaltige, vielfältiger Einsatzbereich der Erfindung.

Der Drehtisch erlaubt dabei nicht nur eine Verteilung der Rahmen, sondern gilt auch für ein Umsetzen des Rahmens, zum Beispiel als Bauteil, welches im Transportweg an einer Ecke steht.

Die Verwendung des vorgeschlagenen Drehtisches ist weder auf den Einsatzbereich bei einer Maschine noch auf den Einsatzbereich innerhalb einer Fertigungsstraße beschränkt. Sowohl in diesen einzelnen Anwendungen, wie aber auch bei kombinierten Anwendungen, wo also der Drehtisch in einer Fertigungsstraße auch dazu dient, die Bearbeitung eines Rahmens in einer Bearbeitungsmaschine durch Drehen des Rahmens, separiert angesteuert, zu unterstützen, ergibt erhebliche Vorteile bei einer automatischen Fertigung vorgenannter Rahmen.

Der Drehtisch weist vorteilhafterweise auch ein Transportmittel für den Rahmen auf. Ein solches Transportmittel ist beispielsweise durch ein Förderband angegeben, welches heb- und senkbar ist und welches den Rahmen in den, beziehungsweise aus dem Drehbereich des Drehtisches fördert. Dies ist sowohl zwischen zwei Bearbeitungsschritten als auch nach dem letzten Bearbeitungsschritt für einen Rahmen oder ein Rahmenteil vorgesehen.

Von Vorteil ist es weiter, wenn das Förderband auf eine unterschiedliche Breite entsprechend unterschiedlicher Maße des Rahmens einstellbar ist.

Der Rahmen, beziehungsweise Teilrahmen, wird, wie bereits beim Verfahren beschrieben, in einer Weiterbildung der Erfindung zwischen zwei Bearbeitungsschritten, beziehungsweise Herstellungsschritten, gedreht. Dies erfolgt entsprechend der Form des jeweils zu bearbeitenden, beziehungsweise herzustellenden Rahmens in einem Winkel von 90°, 180° oder in einem Winkel, der sich aus der Form eines zu bearbeitenden Vieleckes ergibt.

Der Drehtisch ist entsprechend einer Weiterbildung der Erfindung mit einem Drehturm versehen, auf dem ein H-förmiges Gestell angeordnet ist, das Anschläge trägt und welches Förderbänder zur Bewegung des zu bearbeitenden Rahmens aufweist.

Der Drehturm ist gemäß eines weiteren Aspektes der Erfindung derart ausgebildet, daß entweder eine Bewegung um eine vertikale im Raum geneigte oder um eine horizontale Drehachse erlaubt ist.

Das Förderband ist vorteilhafterweise aus einem Material mit hohem Reibungskoeffizienten hergestellt, wodurch der Transport der Rahmen erleichtert wird und auch bei einer Drehung eine höhere Haftung besteht.

Das Förderband wird in einer Weiterbildung der Erfindung zusätzlich mit mindestens einem Greifer und/oder einer Klappe zur Fixierung des Rahmens oder Teilrahmens auf dem Drehtisch während der Drehung versehen.

Zur Verringerung oder Vermeidung hoher Zentrifugalkräfte während der Drehung des Rahmens wurde gefunden, daß der Drehtisch derart ausgebildet ist, daß der Rahmen während der Drehbewegung direkt vor, beziehungsweise über der Drehachse angeordnet ist.

Gemäß einer weiteren erfindungsgemäßen Variante wird vorgeschlagen, daß der Drehtisch vor, während oder nach dem Drehen des Rahmens/Teilrahmens angehoben oder abgesenkt wird. Es wurde bereits darauf hingewiesen, daß der Drehtisch eine Absenk- oder Anhebvorrichtung aufweist. Diese kann während, vor oder nach dem Drehen aktiviert werden. Diese beiden Bewegungen können simultan ablaufen und führen zu einer entsprechenden Beschleunigung des jeweiligen Transportschrittes. In gleicher Weise ist es möglich, daß der Rahmen vor, während oder nach dem Drehen auf dem Drehtisch auf diesen transportiert wird. Es ist möglich, daß ein verhältnismäßig großer Drehtisch realisiert wird, um auch verhältnismäßig großflächigen Rahmen ein Auflager zu bieten. Bei kleineren Rahmen kann es von Vorteil sein, daß diese über den Drehtisch durchtransportiert werden, um nach der abgeschlossenen Drehung gleich ausgefördert zu werden. Dieser Transport kann während der Drehung erfolgen.

Die Erfindung wird nachfolgend anhand einer Zeichnung beschrieben.

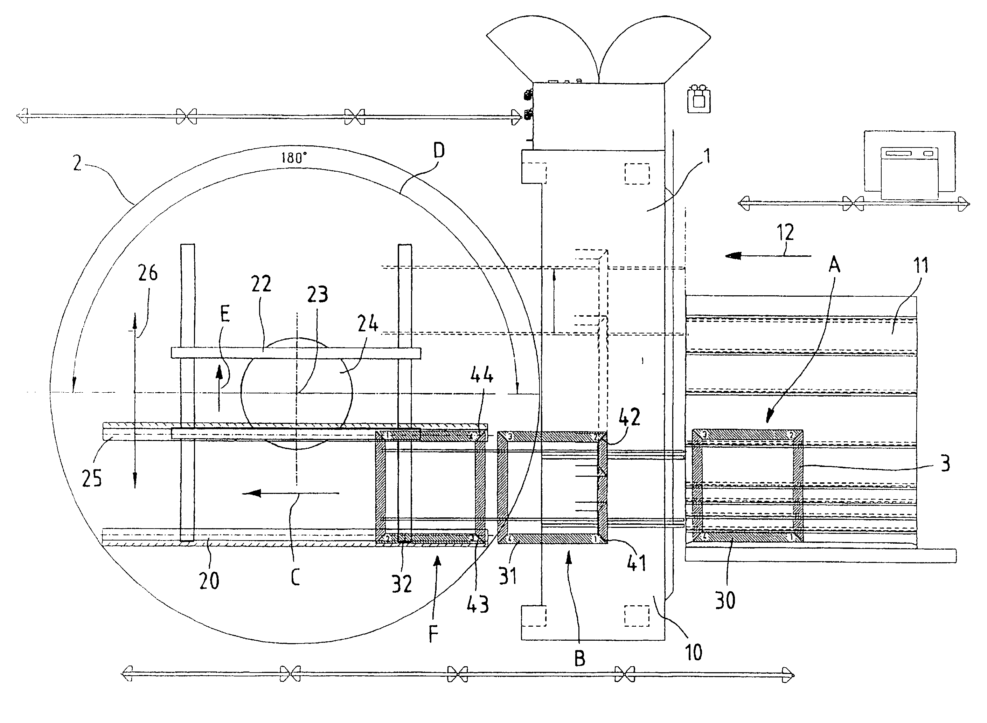

Die Zeichnung zeigt in einer Draufsicht eine mögliche erfindungsgemäße Anordnung.

Der Rahmen 3 liegt bei der Maschine 1 auf einem Auflagetisch 11 auf. Die Maschine 1 ist beispielsweise als Verputzmaschine 10 ausgbildet. Dieser Tisch 11 weist zum Beispiel Fördermittel in Form eines Riemenantriebes oder dergleichen auf, der es erlaubt, daß der Rahmen 3 in die Maschine 1 eingezogen wird. Liegt der Rahmen 3, 30 noch in Förderrichtung 12 vor der Maschine 1, so befindet sich der andere Rahmen 31 bereits in der Maschine, wobei die in Förderrichtung 12 hinteren Ecken 41, 42 durch den Bearbeitungskopf der Maschine 1 bearbeitet werden. Der Bearbeitungskopf der Maschine 1 ist nicht weiter gezeigt. Es ergibt sich, daß zunächst der Rahmen 31 mit seinen eigentlich vorne liegenden Ecken durchtranportiert wird und erst der hintere Eckbereich an den Ecken 41, 42 zuerst bearbeitet wird.

Gemäß der Erfindung wird vorgeschlagen, daß der Rahmen 3 zwischen zwei Bearbeitungsschritten durch einen Drehtisch 2 gedreht wird.

Der Drehtisch 2 besteht aus einem Drehturm 24, der eine Bewegung um eine vertikale Drehachse 23 erlaubt. In gleicher Weise ist es natürlich möglich, die Anordnung der Drehachse 23 auch horizontal zu wählen.

Auf dem Drehturm 24 ist ein H-förmiges Gestell 22 vorgesehen, welches die beiden Anschläge 20, 21 trägt. Jeder Anschlag 20, 21 ist mit einem Förderband 25 ausgestattet, um den auf dem Drehtisch 2 aufliegenden Rahmen 32 auf dem Drehtisch zu bewegen, das heißt, aus der Bearbeitungsmaschine 1 zu entnehmen und in diese für die weiteren Bearbeitungsschritte zurückzugeben. Günstigerweise weist das Förderband 25 eine hohe Reibung auf, um ohne zusätzliche Haltemittel zu erreichen, daß der Rahmen 3 beziehungsweise 32 sicher auf dem Drehtisch auch bei der Rotation liegt. Natürlich ist es möglich, durch das Vorsehen einer Klappe oder eines Greifers den auf dem Drehtisch 2 aufliegenden Rahmen 3, 32 festzulegen, um noch eine schnellere Drehbewegung zu erlauben. Es ist auch möglich, während der Drehbewegung den Schwerpunkt des Rahmens über der Drehachse 23 anzuordnen, damit keine resultierenden Zentrifugalkräfte entstehen.

Die beiden Anschläge 20, 21 sind längs des Doppelpfeiles 26 auf dem Gestell 22 verfahrbar. Dabei ist vorgesehen, daß die Anschläge 20, 21 auch unabhängig voneinander positionierbar sind, um die Anschläge den unterschiedlichen Rahmengrößen anzupassen. Die Verfahrbarkeit der Anschläge 20, 21 erlaubt aber auch, daß, wenn der Drehtisch 2 um 180° gewendet ist, den umgedrehten Rahmen an der gleichen Stelle von dem Drehtisch 2 auszufördern, an welcher er eingefördert worden ist. Dadurch wird erreicht, daß die Lage der Bearbeitungsköpfe nicht verstellt werden muß.

In dem hier dargestellten Ausführungsbeispiel der Erfindung ist vorgesehen, daß der Drehtisch 2 in Förderrichtung 12 des Rahmens 3 hinter der Maschine 1 angeordnet ist. Die Erfindung ist in gleicher Weise aber auch einsetzbar, wenn der Drehtisch 2 unter dem Bearbeitungskopf der Maschine 1 angeordnet ist. In einer solchen Ausgestaltung ist die Bearbeitungsmaschine im Wesentlichen portalartig ausgestaltet, wobei die lichte Weite zwischen den Portalstützen eine freie Drehbarkeit des Drehtisches erlaubt. Gegebenenfalls werden bei einer solchen Ausgestaltung die Bearbeitungsköpfe vor der Drehung weg bewegt um die Drehung zu erlauben und hernach wieder neu positioniert.

Günstig ist es dabei, daß der Drehtisch 2 eine Hub- beziehungsweise Absenkvorrichtung aufweist. Durch die Hub- beziehungsweise Absenkvorrichtung wird erreicht, daß der Drehtisch beziehungsweise der darauf aufliegende Rahmen aus dem Kollisionsradius bewegt wird, das heißt, eine Drehung sicher möglich ist. Eine solche Ausgestaltung kann dazu verwendet werden den Rahmen zum Beispiel von der Bearbeitungsmaschine zu übernehmen, beziehungsweise abzuheben oder aufzulegen. Eine solche Ausgestaltung ist bei beiden Varianten, das heißt, Drehtisch 2 hinter, beziehungsweise vor der Maschine 1 oder unter der Maschine 1 einsetzbar.

In der Zeichnung sind die verschiedenen erfindungsgemäßen Verfahrensschritte mit Großbuchstaben ebenfalls gekennzeichnet. Bei A wird der Rahmen 3, 30 in die Bearbeitungsmaschine 1 eingefördert. Das vordere Ende (im Bezug auf die Förderrichtung 12) des Rahmens 3 wird bei Stellung B durch die Maschine 1 durchgefördert und es werden zuerst die in Förderrichtung hintenliegenden Ecken 41, 42 bearbeitet.

Bei C wird der Rahmen 3 auf den Drehtisch 2 aufgefördert und gegebenenfalls gleich an das gegenüberliegenden Ende auf dem Drehtisch 2 durchgefördert, um eine schnellere Übergabe zu erlauben.

Mit D ist die Rotation um 180° um die Drehachse 23 angedeutet. Alternativ ist vorgesehen, daß vor dem Verdrehen der Drehtisch 2 über die an dem Drehturm 24 vorgesehenen Hub- beziehungsweise Absenkvorrichtung gehoben oder abgesenkt wird, um ein kollisionsfreies Verschwenken zu erlauben. Vor, während oder nach dem Verschwenken wird der Rahmen 31 mit Hilfe der beweglichen Anschläge 20, 21 (E) auf dem Drehtisch auf der anderen Seite positioniert, um die Ausgabe zu erleichtern. Insbesondere wenn das Positionieren und Drehen beziehungsweise auch das Abheben oder Ansenken des Drehtisches gleichzeitig erfolgt, wird Bearbeitungszeit eingespart. In Schritt F ist gezeigt, daß die nicht bearbeiteten Ecken 43, 44 jetzt so positioniert sind, wie anfänglich die Ecken 41, 42, das heißt, das Bearbeitungswerkzeug muß bezüglich der Gehrungsflächen oder sonstigen Kanten nicht umpositioniert werden. Der Rahmen 32 wird bei Schritt F aus dem Drehtisch 2 heraus in die Maschine 1 gefördert, wobei zum einen wieder das Antriebsmittel, zum Beispiel das Förderband 25 des Drehtisches 2 oder entsprechende Antriebsmittel der Maschine 1 dienen. Ist die Bearbeitung in der Maschine 1 abgeschlossen, wird der fertig bearbeitete Fensterrahmen gegebenenfalls auch über das Fördermittel 25 des Drehtisches 2 austransportiert. Natürlich ist es auch möglich, den Rahmen entgegen der Hauptförderrichtung 12 auf dem Auflagetisch 11 auszufördern.

Neben dem hier vorgestellten Prinzip der 180°-Drehung ist es aber auch möglich, den Rahmen nur um 90° oder weniger zu schwenken, um eine entsprechende Positionierung des Rahmens zu erreichen. Insbesondere wenn zum Beispiel nur ein Bearbeitungskopf vorgesehen ist, wird durch ein 90°-Verschwenken jede zu bearbeitende Ecke entsprechend positioniert, ohne den Bearbeitungskopf umstellen zu müssen. In einem solchen Fall sind Fördermittel auf dem Drehtisch vorgesehen, die orthogonal wirken, das bedeutet, eine Bewegung des Rahmens zumindest entlang der beiden Hauptachsen der Tischebene und/oder gegebenenfalls sogar eine Überlagerung dieser beiden Bewegungen für eine schräge Bewegung des Rahmens erlauben.

## Patentansprüche

1. Verfahren zum Bearbeiten, insbesondere Verschweißen, Verputzen und/oder Montieren von aus mehreren Kunststoffprofilen bestehenden Fenster- oder Türrahmen beziehungsweise Teilrahmen, wobei nach einem ersten Bearbeitungsschritt in einer ersten Bearbeitungsmaschine der Rahmen/Teilrahmen auf einem Drehtisch gedreht wird und dann in einem zweiten Bearbeitungsschritt entweder der ersten Bearbeitungsmaschine oder einer zweiten, anderen Bearbeitungsmaschine zugeführt und bearbeitet wird, und dazu die Rahmen bzw. Teilrahmen auf den Drehtisch, der an einem Ort außerhalb der Bearbeitungsmaschine bzw. in einer von der Bearbeitungsebene unterschiedlichen Ebene angeordnet ist, gefördert werden.

2. Verfahren nach Anspruch 1, **dadurch gekennzeichnet, daß** der Drehtisch vor, während oder nach dem Drehen des Fensterrahmens angehoben oder abgesenkt wird und/oder der Rahmen vor, während oder nach dem Drehen auf dem Drehtisch auf diesem transportiert wird.

3. Maschine für die Herstellung und/oder Bearbeitung von aus Kunststoffprofilen bestehenden Tür- oder Fensterrahmen, wobei die Maschine mindestens einen Bearbeitungskopf trägt, der insbesondere im Eckbereich des Rahmens beziehungsweise der Gehrungsflächen des Kunststoffprofiles vorgesehen ist, **dadurch gekennzeichnet, daß** an der Maschine ein Drehtisch an einem Ort außerhalb der Bearbeitunsmaschine bzw. einer Ebene außerhalb der Bearbeitungsebene für den Rahmen beziehungsweise den Teilrahmen vorgesehen ist, um den Rahmen beziehungsweise Teilrahmen zwischen zwei Bearbeitungs- oder Herstellschritten zu drehen.

4. Maschine nach Anspruch 3, **dadurch gekennzeichnet, daß** der Drehtisch in Förderrichtung des Rahmens vor, oberhalb, unterhalb oder hinter der Maschine angeordnet ist.

5. Maschine nach einem oder mehreren der vorhergehenden Ansprüche, **dadurch gekennzeichnet, daß** die Maschine als Verputzmaschine oder als Schweißmaschine ausgestaltet ist und einen, zwei oder vier Bearbeitungsköpfe aufweist.

6. Maschine nach einem oder mehreren der vorhergehenden Ansprüche, **dadurch gekennzeichnet, daß** der Drehtisch eine Hub- beziehungsweise Absenkvorrichtung aufweist, mittels derer der Rahmen in unterschiedlichen Bearbeitungsund/oder Transportebenen positionier- beziehungsweise transportierbar ist.

7. Maschine nach einem oder mehreren der vorhergehenden Ansprüche, **dadurch gekennzeichnet, daß** der Drehtisch unter dem Bearbeitungskopf angeordnet ist.

8. Maschine nach einem oder mehreren der vorhergehenden Ansprüche, **dadurch gekennzeichnet, daß** der Drehtisch mindestens ein Transportmittel, insbesondere ein Förderband, für den Rahmen aufweist.

9. Maschine nach einem oder mehreren der vorhergehenden Ansprüche, **dadurch gekennzeichnet, daß** der Drehtisch (2) den Rahmen (3, 30, 31, 32) beziehungsweise Teilrahmen, zwischen zwei Bearbeitungs- oder Herstellschritten um jeweils den Winkel dreht, der sich aus der Form eines Vielecks des herzustellenden oder zu bearbeitenden Rahmens (3, 30, 31, 32) ergibt.

10. Maschine nach einem oder mehreren der vorhergehenden Ansprüche, **dadurch gekennzeichnet, daß** der Drehtisch (2) einen Drehturm (24) aufweist, auf dem ein H-förmiges Gestell (22) angeordnet ist, das Anschläge (20, 21) trägt, und welches mit Förderbändern (25) zur Bewegung des zu bearbeitenden Rahmens (3, 30, 31, 32) oder Teilrahmens versehen ist.

11. Maschine nach einem oder mehreren der vorhergehenden Ansprüche, **dadurch gekennzeichnet, daß** der Drehturm (24) derart ausgebildet ist, daß er eine Bewegung um eine vertikale, horizontale oder im Raum geneigte Drehachse erlaubt.

12. Maschine nach einem oder mehreren der vorhergehenden Ansprüche, **dadurch gekennzeichnet, daß** die Breite des Transportmittels veränderbar ist und/oder das Förderband (25) ein Material mit einem hohen Reibungskoeffizienten umfaßt und/oder das Förderband (25) beziehungsweise der Drehtisch zusätzlich mindestens einen Greifer und/oder mindestens eine Klappe zur Fixierung des Rahmens (3, 30, 31, 32) auf dem Drehtisch (2) während der Drehung aufweist.

13. Maschine nach einem oder mehreren der vorhergehenden Ansprüche, **dadurch gekennzeichnet, daß** der Drehtisch (2) derart ausgebildet ist, daß der Rahmen (3, 30, 31, 32) zur Vermeidung beziehungsweise Verringerung von Zentrifugalkräften während der Drehbewegung direkt vor beziehungsweise über der Drehachse (23) angeordnet ist.

14. Fertigungsstraße für die Herstellung und Bearbeitung von aus Kunststoffprofilen bestehenden Tür- oder Fensterrahmen beziehungsweise Teilrahmen, wobei entlang eines Transportweges mindestens eine Maschine für die Herstellung und Bearbeitung von aus Kunststoffprofilen bestehenden Tür- oder Fensterrahmen, insbesondere eine Schweiß-, Verputz- oder Montagemaschine angeordnet ist, **dadurch gekennzeichnet, daß** in dem Transportweg ein Drehtisch für den Rahmen angeordnet ist.

15. Fertigungsstraße nach Anspruch 14, **dadurch gekennzeichnet, daß** an dem Drehtisch ein oder mehrere Eingangstranportmittel anschließen, auf welchen Fenster/Türrahmen oder Fenster-/Türteilrahmen angefördert werden und an dem Drehtisch ein oder mehrere Ausgangstransportmittel für einen Abtransport der Rahmen/Teilrahmen anschließen.

16. Fertigungsstraße nach Anspruch 15, **dadurch gekennzeichnet, daß** das Eingangstransportmittel auch als Ausgangstransportmittel dient.

17. Maschine nach einem oder mehreren der vorhergehenden Ansprüche 3 bis 13 oder Fertigungsstraße nach einem oder mehreren der vorhergehenden Ansprüche 14 bis 16, jeweils mit einem Drehtisch, wobei der Drehtisch die angeförderten Rahmen beziehungsweise Teilrahmen auf einer ersten Ebene aufnimmt und die gedrehten Rahmen beziehungsweie Teilrahmen auf einer zweiten, von der ersten Ebene verschiedene Ebene wieder ausgibt.

18. Verwendung eines Drehtisches in einer Maschine für die Herstellung und/oder Bearbeitung von aus Kunststoffprofilen bestehenden Tür- oder Fensterrahmen für das Drehen des Rahmens zwischen zwei Bearbeitungsschritten.

19. Verwendung eines Drehtisches in einer Fertigungsstraße für die Herstellung und/oder Bearbeitung von aus Kunststoffprofilen bestehenden Tür- oder Fensterrahmen für das Verteilen oder Umsetzen eines Eingangsstroms von Rahmen in einen oder mehrere Ausgangsströme.

## Claims

1. Method for machining, in particular welding, trimming and/or assembling window or door frames, respectively partial frames, consisting of several synthetic profiles, where after a first machining step in a first machine tool the frame/partial frame is turned on a turntable and then in a second machining step is guided to either the first machine tool or to another second machine tool and is machined there, and that for that purpose the frames, respectively the partial frames, are conveyed on the turntable arranged on a position outside the machine tool, respectively in a plane differing from the machining plane.

2. Method according to claim 1, **characterised in that** the turntable is lifted or lowered before, during or after turning the window frame, and/or the frame is conveyed on the turntable before, during or after turning on the turntable.

3. Machine for producing and/or machining door or window frames consisting of synthetic profiles, the machine carrying at least one machining head which is provided in particular in the corner region of the frame, respectively the mitre surfaces of the synthetic, profile, **characterised in that** on the machine a turntable is provided at a spot outside the machine tool, respectively a plane outside the machining plane for the frame, respectively the partial frame, in order to turn the frame, respectively the partial frame between two machining or production steps.

4. Machine according to claim 3, **characterised in that** the turntable is arranged in the conveying direction of the frame in front of the machine, above it, below it or behind it.

5. Machine according to one or more of the preceding claims, **characterised in that** the machine is designed as trimming machine or as welding machine and has one, two or four machining heads.

6. Machine according to one or more of the preceding claims, **characterised in that** the turntable has a lifting device, respectively a lowering device, by means of which the frame can be positioned, respectively conveyed, in different machining and/or conveying planes.

7. Machine according to one or more of the preceding claims, **characterised in that** the turntable is arranged below the machining head.

8. Machine according to one or more of the preceding claims, **characterised in that** the turntable has at least one means of conveying, in particular a conveyor belt, for the frame.

9. Machine according to one or more of the preceding claims, **characterised in that** the turntable (2) turns the frame (3, 30, 31, 32), respectively the partial frame, between two machining or manufacturing steps around the angle, which follows from the shape of a polygon of the frame (3, 30, 31, 32) which has to be manufactured or to be machined.

10. Machine according to one or more of the preceding claims, **characterised in that** the turntable (2) has a turning tower (24) on which an H-shaped stand (22) is arranged which carries stoppers (20, 21) and which is provided with conveyor belts (25) for moving the frame (3, 30, 31, 32) or the partial frame which has to be machined.

11. Machine according to one or more of the preceding claims, **characterised in that** the turning tower (24) is designed in such a way that it allows a movement around a vertical, horizontal or inclined rotational axis.

12. Machine according to one or more of the preceding claims, **characterised in that** the width of the conveying means can be changed and/or the conveyor belt (25) comprises a material with a high coefficient of friction, and/or the conveyor belt (25), respectively the turntable, has additionally at least one gripper and/or at least one flap for fixing the frame (3, 30, 31, 32) on the turntable (2) during the turning.

13. Machine according to one or more of the preceding claims, **characterised in that** the turntable (2) is designed in such a way that the frame (3, 30, 31, 32) is arranged directly in front of, respectively above, the rotational axis (23) in order to avoid, respectively reduce, centrifugal forces during the turning movement.

14. Assembly line for manufacturing and machining of door or window frames, respectively partial frames, consisting of synthetic profiles, where along a conveying path at least one machine for manufacturing and machining door or window frames consisting of synthetic profiles, in particular a welding, trimming or assembly machine, is arranged, **characterised in that** in the conveying path a turntable for the frame is arranged.

15. Assembly line according to claim 14, **characterised in that** on the turntable one or more entry conveying means are connected on which window/door frames or window/door partial frames are fed, and on the turntable one or more outlet conveying means are connected for the removal of the frames/partial frames.

16. Assembly line according to claim 15, **characterised in that** the entry conveying means serves also as outlet conveying means.

17. Machine according to one or more of the preceding claims 3 to 13 or assembly line according to one or more of the preceding claims 14 to 16, each comprising a turntable, the turntable picking up the fed frames, respectively partial frames, on a first plane, and putting out again the turned frames, respectively partial frames, on a second plane, differing from the first plane.

18. Application ot a turntable in a machine for manufacturing and/or machining of door or window frames consisting of synthetic profiles for the turning of the frame between two machining steps.

19. Application of a turntable in an assembly line for the manufacturing and/or machining of door or window frames consisting of synthetic profiles for distributing or shifting of an entry flow of frames into one or more outlet flows.

## Revendications

1. Procédé d'usinage et, en particulier, de soudage, de finition et/ou de montage de cadres ou de parties de cadres de fenêtres ou de portes, constituées de plusieurs profilés en matière plastique, procédé selon lequel le cadre ou les parties de cadres sont pivotées sur une table tournante, suite à une première étape d'usinage par une première machine d'usinage puis, sont soit renvoyées vers la première machine d'usinage pour être soumises à une deuxième étape d'usinage, soit acheminées vers une deuxième machine d'usinage, différente de la première, pour une deuxième étape d'usinage, et dont la table tournante est située à l'extérieur de la machine d'usinage ou à un niveau différent de celui de l'usinage par ces machines.

2. Procédé selon la revendication 1, **caractérisé en ce que** la table tournante monte ou descend avant, pendant ou après le pivotement du cadre d'une fenêtre et/ou **en ce que** le cadre est transporté sur cette table tournante avant, pendant ou après son pivotement.

3. Machine de fabrication et/ou d'usinage de cadres de portes ou de fenêtres constitués par des profilés en plastique, comportant au moins une tête d'usinage, située en particulier au niveau des angles du cadre et plus précisément dans les zones d'onglets des profilés en matière plastique, **caractérisée en ce qu'**une table tournante est prévue à un emplacement situé à l'extérieur de la machine d'usinage ou à un niveau différent de celui de l'usinage du cadre ou de la partie d'un cadre par cette machine, afin de pivoter le cadre ou la partie d'un cadre entre deux étapes d'usinage ou de fabrication.

4. Machine selon la revendication 3, **caractérisée en ce que** la table tournante est située soit en amont soit en aval ou soit au-dessus soit en dessous de la machine en suivant le sens d'avancement du cadre.

5. Machine selon une ou plusieurs des revendications précédentes, **caractérisée en ce que** la machine peut être équipée comme une machine de finition ou de soudage, comportant une, deux ou quatre têtes d'usinage.

6. Machine selon une ou plusieurs des revendications précédentes, **caractérisée en ce que** la table tournante comporte un dispositif de levage ou d'abaissement permettant le positionnement du cadre à des hauteurs différentes pour l'usinage ou le transport.

7. Machine selon une ou plusieurs des revendications précédentes, **caractérisée en ce que** la table tournante est située en dessous de la tête d'usinage.

8. Machine selon une ou plusieurs des revendications précédentes, **caractérisée en ce que** la table tournante possède au moins un moyen de transport, en particulier une bande transporteuse, pour le déplacement du cadre.

9. Machine selon une ou plusieurs des revendications précédentes, **caractérisée en ce que** la table tournante (2) fait pivoter le cadre (3, 30, 31, 32) ou la partie d'un cadre entre deux étapes d'usinage ou de fabrication d'un des angles inclus dans le polygone du cadre à fabriquer ou à usiner (3, 30, 31, 32).

10. Machine selon une ou plusieurs des revendications précédentes, **caractérisée en ce que** la table tournante (2) possède une tour pivotante (24) sur laquelle est située une structure (22) en forme de 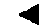 H', comportant des butées (20, 21) et des transporteurs à bandes (25) destinés au déplacement du cadre (3, 30, 31, 32) ou de la partie d'un cadre à usiner.

11. Machine selon une ou plusieurs des revendications précédentes, **caractérisée en ce que** la tour pivotante (24) possède une configuration lui permettant de pivoter autour d'un axe vertical, horizontal ou incliné dans l'espace.

12. Machine selon une ou plusieurs des revendications précédentes, **caractérisée en ce que** la largeur du moyen de transport (25) est variable et/ou **en ce que** la bande transporteuse (25) consiste en un matériau à coefficient de frottement élevé et/ou **en ce que** le transporteur à bande (25) ou la table tournante possède également au moins un grappin et/ou au moins un clapet maintenant le cadre (3, 30, 31, 32) sur la table tournante (2) lors du pivotement.

13. Machine selon une ou plusieurs des revendications précédentes, **caractérisée en ce que** la table tournante (2) possède la possibilité de ramener le cadre (3, 30, 31, 32) au-dessus de l'axe de rotation (23) lors du mouvement de pivotement afin d'éliminer ou de réduire la force centrifuge.

14. Ligne de fabrication et d'usinage de cadres ou de parties de cadres de fenêtres ou de portes consistant en des profilés en matière plastique, comportant le long d'un chemin de transport au moins une machine pour la fabrication et l'usinage de cadres de portes et de fenêtres consistant en des profilés en matière plastique et en particulier une machine de soudage, de finition ou de montage, **caractérisée en ce qu'**une table tournante pour le pivotement d'un cadre est située sur le chemin de transport.

15. Ligne de fabrication selon la revendication 14, **caractérisée en ce que** la table tournante est située à l'extrémité d'un ou plusieurs moyens de transport entrant, acheminant des cadres de portes et de fenêtres ou des parties de cadres de portes et de fenêtres et **en ce que** la table tournante est située à l'extrémité d'un ou plusieurs moyens de transport sortant, évacuant les cadres et les parties de cadres.

16. Ligne de fabrication selon la revendication 15, **caractérisée en ce que** le moyen de transport entrant sert également comme moyen de transport sortant.

17. Machine selon une ou plusieurs des revendications précédentes 3 à 13 ou ligne de fabrication selon une ou plusieurs des revendications précédentes 14 à 16, chacune équipée d'une table tournante recevant les cadres ou les parties de cadres acheminés sur un premier niveau et sortant les cadres ou les parties de cadres pivotés sur un deuxième niveau, différent du premier.

18. Utilisation d'une table tournante à l'intérieur d'une machine pour la fabrication et/ou l'usinage de cadres de portes ou de fenêtres consistant en des profilés en matière plastique pour le pivotement des cadres entre deux étapes d'usinage.

19. Utilisation d'une table tournante à l'intérieur d'une ligne de fabrication pour la fabrication et/ou l'usinage de cadres de portes ou de fenêtres consistant en des profilés en matière plastique pour la distribution ou le transfert d'un flux de cadres entrant vers un ou plusieurs flux sortants.
